# EUROPÄISCHE PATENTSCHRIFT

(11) **EP 2 817 131 B1**
(45) Veröffentlichungstag und Bekanntmachung des Hinweises auf die Patenterteilung: **25.05.2016**
(21) Anmeldenummer: 13702197.8
(22) Anmeldetag: 22.01.2013
(51) Int. Cl.: B29B 17/00, C08J 11/06

(54) **VERFAHREN UND ANORDNUNG ZUM RECYCLEN VON KLEBSTOFFBEHAFTETEN FOLIENRESTEN**
METHOD AND ARRANGEMENT FOR RECYCLING ADHESIVE-CONTAINING FILM WASTE
PROCEDE ET SYSTEME DE RECYCLAGE DE RESIDUS DE FILMS CONTAMINES PAR DES ADHESIFS

(30) Priorität: 24.02.2012 DE 102012101481
(43) Veröffentlichungstag der Anmeldung: 31.12.2014
(73) Patentinhaber: Wissing, Johannes, 48703 Stadtlohn (DE); Leitz, Wolfgang, 73642 Welzheim (DE)
(72) Erfinder: WISSING, Johannes, 48703 Stadtlohn (DE)
(74) Vertreter: Habbel, Ludwig
(86) Internationale Anmeldenummer: PCT/EP2013/051115
(87) Internationale Veröffentlichungsnummer: WO 2013/124104

(56) Entgegenhaltungen:
- EP-A2- 0 430 199
- EP-A2- 1 493 791
- DE-A1- 19 643 239

## Beschreibung

Die Erfindung betrifft ein Verfahren nach dem Oberbegriff des Anspruchs 1 sowie eine für die Durchführung des Verfahrens geeignete Anordnung.

Aus der EP 0 430 199 A2 als nächstkommender Stand der Technik ist ein Verfahren zum Recyclen von klebstoffhaltigem Material in Form von Folienresten bekannt. Dabei werden die Folienreste zerkleinert und ihnen wird ein nicht klebender Stoff zugemischt.

Aus der DE 195 31 886 A1 ist ein kontinuierlich ablaufendes Verfahren zur Wiedergewinnung von Rohmaterialien aus beschichteten Folien bekannt. Dabei sollen von Magnetbändern oder auch Fotofilmen die Beschichtungen entfernt werden, so dass die darin enthaltenen Partikel wiedergewonnen werden können, und auch das von der Beschichtung befreite Trägermaterial kann für sich genommen wiederaufbereitet werden. Die Problematik, dass die zu behandelnden Folienreste mit Klebstoffen versehen sind, liegt dabei nicht vor.

Aus der DE 196 43 239 A1 ist die Verwendung von Folien aus Recyclingmaterial zur Herstellung von Klebebändern bekannt. Dabei wird das Recyclingmaterial zunächst mittels eines Plastikagglomerators zerkleinert wird und das Agglomerat zu einer Folie extrudiert wird.

Aus der DE 21 14 304 B2 ist ein Verfahren zur Rückgewinnung von Polymerisaten aus Abfallprodukten bekannt, bei welchem die Abfallprodukte kontinuierlich zerkleinert und zu einem Vlies abgelegt werden, das dann in kleine Faserverbände zerschlagen wird. Für eine anschließende Verdichtung kann ein Scheibenverdichter benutzt werden. Die Abfallprodukte fallen bei der Herstellung von synthetischen Faserstoffen an. Die Behandlung von klebstoffbehafteten Folienresten ist in dieser Schrift nicht angesprochen.

Die DE 42 21 681 C2 beschreibt als nächstkommender Stand der Technik ein Verfahren, bei welchem als klebstoffbehaftete Folienreste beispielsweise die in diesem Stand der Technik erwähnten Gitterabfälle in Frage kommen, die auch als Stanzgitter bezeichnet werden, aber auch Reste von Klebebändern, großflächigen Klebefolien und dergleichen sollen nach diesem Verfahren behandelt werden.

Problematisch ist die Klebkraft des verwendeten Haftklebers. Zerkleinerungsvorrichtungen werden durch Anlagerung von Folienresten unwirksam bzw. erfordern einen hohen Wartungsaufwand.

Gemäß dem bekannten Stand der Technik wird klebstofffreies Material dem klebstoffbehafteten Material, nämlich den Folienresten zugesetzt, um auf diese Weise rein prozentual entsprechend den nicht klebenden Beimischungen die Klebkraft der gesamten aufzubereitenden Folienmenge herabzusetzen. Dies erfordert eine vergleichsweise komplizierte Logistik, da den klebstoffbehafteten Folienresten nicht klebendes Material beigemischt werden muss, welches vorteilhafter Weise aus derselben Materialgruppe besteht. Beispielsweise sind bei der Aufbereitung von klebstoffbehafteter PE-Folie Zusätze von nicht klebendem Material ebenfalls in Form von PE vorzusehen, um auf diese Weise ein möglichst sortenreines Recyclat zu erhalten, da ansonsten die Produkteigenschaften des Recyclats erheblich verschlechtert werden. Abgesehen von dieser Komplikation der Verfahrensführung bzw. der Vorbereitung für das dann durchzuführende Verfahren ist nachteilig, dass die Klebkraft der klebstoffbehafteten Folienreste nach wie vor unverändert ist. Durch die Zumischung nicht klebender Abfälle kann lediglich die Wahrscheinlichkeit erhöht werden, dass klebende Oberflächen der klebstoffbehafteten Folienreste, sofern sie nicht durch das Zusammenklumpen der klebstoffbehafteten Folienreste auf sich selbst abgedeckt sind, zusätzlich durch die nicht klebenden Abfälle abgedeckt werden, so dass auf diese Weise die klebende Oberfläche insgesamt reduziert wird. Wo jedoch die klebende Oberfläche des aufzuarbeitenden Abfallgemisches mit Anlagenteilen in Kontakt kommt, ist die Klebkraft unverändert, so dass die Gefahr einer Verstopfung der Aufbereitungsanlage nach wie vor, wenn auch in verringertem Maße, gegeben ist.

Trotz dieser Einschränkungen ist die Aufbereitung von klebstoffbehafteten Folienresten grundsätzlich wünschenswert, da diese Folienreste alternativ lediglich thermisch verwertet werden können und somit aus dem Stoffkreislauf herausgenommen werden. Die auf Grundlage von Mineralöl, also nicht nachwachsenden Rohstoffen, hergestellten Folien stofflich zu erhalten und das Recyclat wieder in den Stoffkreislauf zurückzuführen, ist unter ökologischen Gründen wünschenswert, wobei eine ökonomische Verfahrensweise erforderlich ist, um diese stoffliche Wiederverwertung der Folienreste unter praktischen wirtschaftlichen Gesichtspunkten anwenden zu können.

Der Erfindung liegt die Aufgabe zugrunde, ein gattungsgemäßes Verfahren dahingehend zu verbessern, dass dieses wirtschaftlich durchführbar ist und einen störungsfreien Betrieb der dabei verwendeten Anlage ermöglicht. Weiterhin liegt der Erfindung die Aufgabe zugrunde, eine Anordnung anzugeben, die zur Durchführung dieses Verfahrens geeignet ist.

Diese Aufgabe wird durch ein Verfahren mit den Verfahrensschritten nach Anspruch 1 sowie durch eine Anordnung nach Anspruch 7 gelöst.

Die Erfindung schlägt mit anderen Worten vor, die Folienreste zunächst in einer Zerkleinerungsvorrichtung grob zu zerkleinern. Die grobe Zerkleinerung ist insofern wesentlich, als aufgrund der Klebkraft, welche die Folienreste in diesem Verfahrensstadium noch aufweisen, Zerkleinerungsvorrichtungen schnell verstopft bzw. zugesetzt bzw. verklebt werden, die sehr feine Werkzeuge bzw. Öffnungen aufweisen, um eine Feinzerkleinerung der Folienreste zu ermöglichen. Die Zerkleinerungsvorrichtungen weisen üblicherweise ein Sieb, ein Lochblech oder dergleichen auf, welches Durchtrittsöffnungen definierter Größe aufweist, was im Rahmen des vorliegenden Vorschlags als Sieblochung bezeichnet wird. Zu grobes Material wird daher zurückgehalten und weiter zerkleinert, und nur ausreichend kleines Material kann die Sieblochung passieren. Je kleiner die Sieblochung ist, desto länger wird das Material in der Zerkleinerungsvorrichtung gehalten.

Die vorschlagsgemäß grobe Zerkleinerung und dementsprechend große Sieblochung weist mehrere Vorteile auf:
▪ Erstens verstopfen größere Löcher weniger schnell als kleinere.
▪ Zweitens wird das Material weniger lange in der Zerkleinerungsvorrichtung gehalten.
▪ Drittens bewirkt die größere Sieblochung vorteilhaft, dass eine bis zur Lochmitte reichende Stützwirkung, die von dem das Loch umgebenden Rand ausgeht, bei größeren Löchern geringer ist als bei kleineren, so dass ein das Loch eventuell blockierender Materialstopfen bei einer größeren Sieblochung leichter durch das Loch hindurchgedrückt werden kann als durch ein kleineres Loch. Die vorschlagsgemäß vorgesehene größere Sieblochung weist daher gute Selbstreinigungseigenschaften auf.
▪ Viertens wird entsprechend dem Verhältnis zwischen der Oberfläche und dem Volumen eines Materialklumpens mit zunehmendem Durchmesser des Materialklumpens dessen möglicherweise klebewirksame äußere Oberfläche immer kleiner. Bezogen die auf die Materialmenge, die in einem Materialklumpen enthalten ist, ist daher die Klebkraft des Materialklumpens umso geringer, je größer der Materialklumpen ist.
▪ Fünftens ist im Vergleich zu einer Zerkleinerungsmaschine mit feinerer Zerkleinerungswirkung der durch die geringeren Schnitte reduzierte erforderliche Energiebedarf einer Grobzerkleinerungsmaschine vorteilhaft.

Bei den in der Praxis vielfach eingesetzten Schneidmühlen oder ähnlichen Zerkleinerungsmaschinen werden gewöhnlich Siebeinlagen mit einer Sieblochung von 8 bis 16 mm Durchmesser eingesetzt. Eine vorschlagsgemäß grobe Zerkleinerung wird hingegen mit einer Sieblochung von 50 bis 150 mm bewirkt, wobei praktische Versuche als vorteilhaft eine Sieblochung von 80 bis 120 mm Durchmesser ergeben haben. Die daraus resultierenden Materialklumpen weisen einen Durchmesser von 60 bis 120 mm auf, können also kleiner sein als die Lochgröße der Sieblochung, und zwar insbesondere dann, wenn sie nicht rechtwinklig, sondern schräg durch das entsprechende Sieb hindurchgedrückt werden. Da die vorschlagsgemäß vorgesehenen, nachfolgend angeordneten Aggregate die Verarbeitung entsprechend großer Materialklumpen erlauben, tritt eine Verstopfung und ein Materialaufbau durch die Klebwirkung in diesen nachfolgenden Aggregaten nicht auf.

Bei der Grobzerkleinerung bewirkt bereits der Druck des nachfolgenden Materials eine automatische Selbstreinigung, die einen störungsfreien Betrieb der Zerkleinerungsvorrichtung gewährleistet. Aufgrund der klebstoffbehafteten Oberflächenanteile der Folienreste klumpen diese zu Materialklumpen zusammen, die aufgrund der vergleichsweise groben Struktur der Folienreste relativ porös sind. Durch die Klumpenbildung wird jedoch, bezogen auf die jeweils in einem Klumpen vorhandene Materialmenge, die klebfähige Oberfläche des Folienmaterials erheblich reduziert im Vergleich zu einem als Flächenelement vorliegenden Folienrest.

Als zweiter Verfahrensschritt ist vorgesehen, dass das Material derart behandelt wird, dass seine Klebkraft herabgesetzt wird, um auf diese Weise die Materialklumpen anschließend problemlos transportieren zu können. Dazu wird ein flüssiger oder pulverförmiger Stoff dem Material zugesetzt, wobei dieser Stoff die Klebkraft des Klebstoffanteils verringert. Diese Verringerung kann auf unterschiedliche Weise erfolgen: Beispielsweise kann vorgesehen sein, das poröse Material und / oder die Zerkleinerungswerkzeuge mit einem Pulver zu bestreuen, wie z. B. Kreide, Talkum oder feingemahlenes Kunststoffpulver, so dass die klebende Oberfläche der Folienreste durch das Pulver abgedeckt wird. Auch wenn der Klebstoff sich dabei in seinen Eigenschaften nicht verändert, wird doch durch die Abdeckung die Klebkraft dieses Klebstoffanteils der Folienreste herabgesetzt, in der Weise, dass durch die Abdeckung mit dem Pulver das Material an Oberflächen der Aufbereitungsanlage nicht oder nur in einem stark verringerten Maße anhaftet.

Dieser zweite Verfahrensschritt kann dem ersten Verfahrensschritt, nämlich der Grobzerkleinerung, nachgeschaltet sein, beide Verfahrensschritte können jedoch auch gleichzeitig durchgeführt werden. Vorteilhaft werden nicht nur die erzeugten Materialklumpen behandelt, sondern auch die Zerkleinerungsvorrichtung selbst, so dass das Anhaften der Folienreste an der Zerkleinerungsvorrichtung vermieden werden kann. Dementsprechend kann vorgesehen sein, den zweitgenannten Verfahrensschritt auch bereits vor dem erstgenannten Verfahrensschritt durchzuführen, indem beispielsweise der flüssige oder pulverförmige Stoff auf die Zerkleinerungswerkzeuge aufgegeben wird, bevor diese mit dem klebstoffbehafteten Material in Berührung kommen.

Alternativ zur Verwendung des erwähnten Pulvers kann die Klebkraft des Klebstoffanteils mittels eines flüssigen Stoffs verringert werden. Es kann sich dabei beispielsweise um ein Öl handeln. Da die Kunststoffe auf Mineralölbasis hergestellt werden, ist hier eine stoffliche Verwandtschaft zu den verwendeten Folienresten gegeben, wobei das vorerwähnte Pulver vorzugsweise aus dem gleichen Kunststoffmaterial bestehen kann wie die Folienreste oder wie übliche Zuschläge, die bei der Herstellung eines Granulats dem Kunststoff zugegeben werden.

Alternativ zu dem erwähnten Pulver bzw. Öl oder einem vergleichbaren Gleitmittel, welches die Klebkraft des Klebstoffs auf einer Oberfläche der Aufbereitungsanlage verringert, kann vorgesehen sein, nicht nur die Wirkung des Klebstoffs zu verringern, sondern tatsächlich den Klebstoff in seiner klebenden Eigenschaft zu beeinflussen, beispielsweise indem in Wasser gelöste Tenside auf die Materialklumpen und / oder die Zerkleinerungswerkzeuge aufgebracht werden.

Der die Klebkraft des Klebstoffanteils verringernde Stoff, flüssig- oder pulverförmig, kann durch eine drucklose Benetzungs- oder eine den Stoff unter Druck ausbringende Bedüsungsanlage in feiner Verteilung auf die Materialklumpen und / oder das Zerkleinerungswerkzeug aufgestreut, aufgerieselt oder aufgesprüht werden, so dass dieser Stoff in möglichst geringer Menge verwendet werden kann, um die Materialeigenschaften des Recyclats so wenig wie möglich negativ zu beeinflussen und um eine möglichst wirtschaftliche Verfahrensführung zu ermöglichen.

Die nach wie vor vorliegenden porösen Materialklumpen, die nun eine verringerte Klebrigkeit aufweisen, werden vorschlagsgemäß in einem dritten Verfahrensschritt transportiert, so dass sie von der Zerkleinerungsvorrichtung, bzw. einer in diese Zerkleinerungsvorrichtung integrierten, bzw. der dieser Zerkleinerungsvorrichtung nachgeschalteten Bedüsungs- bzw. Benetzungsstation zu einem Agglomerator zugeführt werden, z. B. zu einem Scheibenverdichter, wie er von seinem grundsätzlichen Aufbau her beispielsweise aus der DE 298 14 921 U1 bekannt ist.

Im Unterschied zu anderen Agglomeratoren weist der Scheibenverdichter einen umlaufenden offenen Rand auf, so dass das im Scheibenverdichter bearbeitete Material ausgasen kann. Vorschlagsgemäß ist vorgesehen, dass im Agglomerator das Material auf eine Temperatur von mehr als 100°C gebracht wird, vorzugsweise auf eine Temperatur von 100°C bis 200°C, wobei die Temperatur über die Menge des zugeführten Materials und über die Bewegung im Agglomerator beeinflusst werden kann, beispielsweise über die Drehgeschwindigkeit eines Rühr- und Schneidwerks, oder - bei einem Scheibenverdichter: - über die Relativgeschwindigkeit zwischen den beiden Scheiben des Scheibenverdichters und über die Oberflächengestaltung der beiden Scheiben. Die auf diese Weise einstellbare Temperatur liegt unterhalb des Schmelzpunktes der jeweils verarbeiteten Folienwerkstoffe. Wenn zur Verringerung der Klebkraft den Folienresten zunächst ein pulverförmiges Kunststoffmaterial vom selben Typ wie die verarbeiteten Folienreste zugeführt wurde, wird durch die erzielte Temperatur und durch das mechanische Bearbeiten des Kunststoffmaterials, welches Walk- und Reibbewegungen verursacht, eine innige Verbindung zwischen diesen Pulver- und den Folienanteilen bewirkt, so dass aus dem Agglomerator ein nahezu homogenes Material austritt, welches körnig oder - bei einem Scheibenverdichter: - typischerweise in Form von kleinen, würstchenartigen Materialsträngen vorliegt.

Wenn zur Verringerung der Klebkraft den Materialklumpen Flüssigkeit zugesetzt wurde, beispielsweise Öl oder Tenside in wässriger Lösung, so wird durch die im Agglomerator herrschenden Temperaturen bewirkt, dass ein erheblicher Anteil dieser Flüssigkeiten ausgast, wobei dieses Gas bei einem Scheibenverdichter aufgrund dessen typischer Konstruktion problemlos den Agglomerator verlassen kann und abgezogen sowie ggf. gefiltert werden kann.

Gemäß einem vierten, letzten Verfahrensschritt ist vorschlagsgemäß vorgesehen, dass die aus dem Agglomerator gelangenden Materialstränge zu kleinen, kornartigen Körperchen zerkleinert werden, beispielsweise durch ein umlaufendes Messer. Diese Zerkleinerung kann ggf. direkt im Agglomerator erfolgen. Falls das agglomerierte Material jedoch in einer unerwünscht großen Korngröße vorliegt, ist hierzu ein separater Verfahrensschritt vorgesehen. Aus einem Scheibenverdichter beispielsweise tritt das agglomerierte Material typischerweise in Form länglicher Materialstränge aus, die dann noch zerkleinert werden. Diese kornartigen Körperchen, die auch als Granuli bezeichnet werden können, werden vorschlagsgemäß allerdings als Agglomerat bezeichnet, um sie rein sprachlich von dem sogenannten Granulat zu unterscheiden, wie es in der Kunststoffverarbeitung üblich ist. Granulat weist üblicherweise eine regelmäßige Oberfläche auf, während das vorschlagsgemäß erzeugte Agglomerat deutlich unregelmäßiger geformt sein kann, z. B. wenn die zuvor im Scheibenverdichter erzeugten Materialstränge eine unregelmäßige Oberfläche aufweisen. Aufgrund der Verarbeitung im Scheibenverdichter weisen die Materialstränge nämlich häufig schräg oder wendelförmig verlaufende Riefen in ihrer Oberfläche auf, die sich dann natürlich auch in der Oberfläche des Agglomerats wiederfinden.

Aufgrund der robusten Ausgestaltung der verwendeten Anlage, nämlich durch die Verwendung einer lediglich grob wirkenden Zerkleinerungsvorrichtung und des Agglomerators kann ein störungsfreier und wartungsarmer und dementsprechend wirtschaftlicher Betrieb der Aufbereitungsanlage ermöglicht werden. Dadurch, dass die Klebkraft des Klebstoffanteils nicht durch Bäder mit Lösungsmitteln, wie beispielsweise Alkohol oder dergleichen verringert wird, was einen erheblichen Materialeinsatz teurer Materialien bedingt, sondern dass die zunächst erzeugten Materialklumpen mit einer vergleichsweise geringen Menge eines flüssigen oder pulverförmigen Stoffes bedüst werden können, wird ebenfalls eine sehr wirtschaftliche Verfahrensführung ermöglicht.

Grundsätzlich kann eine beliebige Zerkleinerungsmaschine mit großer Sieblochung verwendet werden. Praktische Versuche haben die Verwendung einer Zerkleinerungsvorrichtung in Form eines Wellenzerkleinerers, z. B. eines Mehrwellenzerkleinerers oder, wirtschaftlich besonders vorteilhaft, eines sogenannten Einwellenzerkleinerers ergeben. Derartige Zerkleinerungsvorrichtungen weisen eine drehbare Welle auf, auf welcher erste Messer angeordnet sind. Weiterhin weist diese Zerkleinerungsvorrichtung feststehend angeordnete zweite Messer auf, so dass das zu zerkleinernde Gut zwischen diesen drehbaren ersten und den feststehenden zweiten Messern zerkleinert wird. In Drehrichtung ist hinter dem feststehenden Messerblock, also den zweiten Messern, eine Abschirmung der drehbaren Welle vorgesehen, die mit Durchtrittsöffnungen versehen ist. Die zerkleinerten Folienreste werden durch diese Durchtrittsöffnungen gepresst, wobei sich die bereits erwähnten Materialklumpen aufgrund der noch vorhandenen Klebkraft des Klebstoffs ergeben. Durch die Ausgestaltung der ersten und zweiten Messer sowie die Spaltbreite zwischen den ersten und zweiten Messern, und durch die Bemessung und Kontur der Durchtrittsöffnungen, z. B. kreisförmig, sechseckig oder dergleichen kann die Formgebung und Größe der erzielbaren Materialklumpen beeinflusst werden, so dass für das jeweils zu verarbeitende Material optimale Ergebnisse erzielbar sind.

Das Abschirmblech kann beispielsweise als Gitter, vorzugsweise jedoch als Lochblech, ausgestaltet sein, so dass eine größtmögliche Stabilität dieser Abschirmung gewährleistet werden kann.

Nach der Zerkleinerung werden die in ihrer Klebkraft bereits verringerten Materialklumpen vorzugsweise zunächst mit einem Förderband transportiert. Dies ermöglicht eine wirtschaftliche Ausgestaltung der Anlage und den Transport über eine große Strecke, und aufgrund der offenen Bauweise sind Betriebsstörungen aufgrund von Verstopfungen nicht zu erwarten. Jedoch sind auch Kratzkettenförderer, Schneckenförderer oder dergleichen denkbar. Bei Verwendung eines Scheibenverdichters als Agglomerator wird dieser vorzugsweise liegend angeordnet und die Zufuhr des Materials in den Scheibenverdichter erfolgt vorzugsweise von oben. Dabei kann vorteilhaft eine Förderschnecke verwendet werden, da diese sicherstellt, dass der im Scheibenverdichter herrschende Druck nicht dazu führt, dass Material aus dem Scheibenverdichter nach oben herausgepresst wird. Vielmehr kann die Förderschnecke problemlos gegen den im Scheibenverdichter herrschenden Druck anarbeiten und weiteres Material in den Scheibenverdichter hineinführen. Das erwähnte Förderband kann insofern vorteilhaft sein, als es die Aufstellung der Zerkleinerungsvorrichtung und des Scheibenverdichters auf dergleichen Ebene ermöglicht, beispielsweise auf einem Hallenboden, wobei von der Zerkleinerungsvorrichtung die Materialklumpen mittels des Förderbandes in eine größere Höhe gefördert werden, nämlich zur Einfüllöffnung der erwähnten Förderschnecke. Dabei kann vorteilhaft vorgesehen sein, dass über dem Schneckenförderer ein Trichter angeordnet ist, so dass die vom Förderband herab fallenden Materialklumpen in den Trichter gelangen und von diesem in den Schneckenförderer.

Ein Ausführungsbeispiel einer Anlage zur Durchführung des vorgeschlagenen Verfahrens wird anhand der rein schematischen Darstellung nachfolgend näher erläutert.

Dabei ist mit 1 insgesamt eine Anlage dargestellt, die zur Verarbeitung von klebstoffbehafteten Folienresten 21 dient. Die Folienreste 21 liegen in größeren, zusammengeknüllten Ballen oder auf schematisch angedeuteten Wickelkernen vor, welche aus einem gleichen oder ähnlichen Kunststoff bestehen wie die Folien. Die Folienreste 21 werden zunächst in einem Bunker 2 gesammelt und mittels eines oszillierend angetriebenen Schiebers 20 an eine Zerkleinerungsvorrichtung 3 herangeführt. Der Schieber 20 bewirkt dabei, dass die Folienreste 21 zu einem Materialblock vorverdichtet werden. Die Zerkleinerungsvorrichtung 3 ist als Einwellenzerkleinerer ausgestaltet und weist eine umlaufende Welle 4 auf, die mit ersten Messern 5 besetzt ist, welche mit feststehenden zweiten Messern 6 in Form eines sogenannten Messerblocks zusammenwirken. Die Drehrichtung der Welle 4 ist mit einem Pfeil angedeutet. In Drehrichtung hinter den zweiten Messern 6 ist eine Abschirmung 7 vorgesehen, die als Lochblech ausgestaltet ist. Aus der Abschirmung 7 der Zerkleinerungsvorrichtung 3 treten die zerkleinerten Folienreste als poröse Materialklumpen 8 aus.

Der Zerkleinerungsvorrichtung 3 ist eine Bedüsungsstation 9 zugeordnet, welche einen die Klebkraft des Klebstoffs verringernden Stoff auf die Welle 4 und die Messer 5 düst. Bei dem dargestellten Ausführungsbeispiel ist die Bedüsungsstation 9 so angeordnet und ausgerichtet, dass sie den Stoff auch auf den der Welle 4 benachbarten Bereich des aus Folienresten 21 gebildeten Materialblocks verteilt sowie in den Spalt zwischen dem Materialblock und der Welle 4, so dass nicht nur die Welle 4 und deren Messer 5, sondern auch klebstoffbehaftete Materialanteile, die kurz vor der Zerkleinerung stehen oder sich bereits im Zerkleinerungsvorgang befinden, mit dem Stoff bedüst werden. Es kann abweichend von dem dargestellten Ausführungsbeispiel ausreichend sein, diesen Stoff ausschließlich auf die Welle 4 zu bringen, so dass deren Oberfläche zuverlässig vor dem Ankleben des Materials geschützt ist. Zudem wird mittels der Welle 4 und den darauf befindlichen Messern 5 der Stoff auf das Material gebracht.

Bei diesem Stoff kann es sich um materialgleiches Kunststoffpulver handeln, welches also aus demselben Kunststoff besteht wie der Kunststoff der Folienreste, oder es kann ein Gleitmittel wie z. B. Öl, oder es können den Klebstoff verändernde Materialien wie z. B. in Wasser gelöste Tenside auf die Oberfläche des Materials gesprüht werden, so dass die Materialklumpen 8 eine Oberfläche mit verringerter Klebkraft aufweisen.

Die aus der Zerkleinerungsvorrichtung 3 gelangenden und in ihrer Klebkraft verringerten Materialklumpen 8 gelangen auf ein Förderband 10, welches die Materialklumpen 8 aufwärts fördert, über einen Trichter 11. Aufgrund ihrer reduzierten Klebkraft fallen die Materialklumpen 8 am Ende von dem Förderband 10 in den Trichter 11 und haften nicht an dem Förderband 10 an.

Der Trichter 11 dient als Einfülltrichter eines Schneckenförderers 12, der die Materialklumpen 8 abwärts fördert und in den mittleren Bereich eines Scheibenverdichters 14 führt. Der Scheibenverdichter 14 ist liegend ausgerichtet und weist zwei Scheiben 15 auf, zwischen denen ein Spalt verbleibt, wobei die beiden zueinander gerichteten Oberflächen der beiden Scheiben 15 durch Vorsprünge 16 profiliert sind, so dass das zwischen die Scheiben 15 gelangte Material gewalkt wird. Bei den im Scheibenverdichter 14 herrschenden Temperaturen von 100°C bis 200°C, die knapp unterhalb dem Schmelzpunkt des zu verarbeitenden Materials liegen, wird die Klebkraft des Klebstoffs dauerhaft beeinträchtigt. Anteile aus der vorliegenden Materialmischung werden aufgrund der offenen Struktur des Scheibenverdichters 14 problemlos entgast, so dass beispielsweise Anteile des Klebstoffs sowie der ggf. zugesetzten flüssigen Stoffe die zur Reduzierung der Klebkraft des Klebstoffs verwendet wurden, aus der Materialmischung entweichen können.

Aus dem Scheibenverdichter 14 gelangt das so aufbereitete Material in Form von Materialsträngen 17. Diese Materialstränge 17 werden in einer Granuliervorrichtung 18 zu unregelmäßig geformten Granuli zerkleinert, wobei zur Unterscheidung von dem in der kunststoffverarbeitenden Industrie sogenannten Granulat diese zerkleinerten Materialstränge 17 nun als Agglomerat 19 bezeichnet werden.

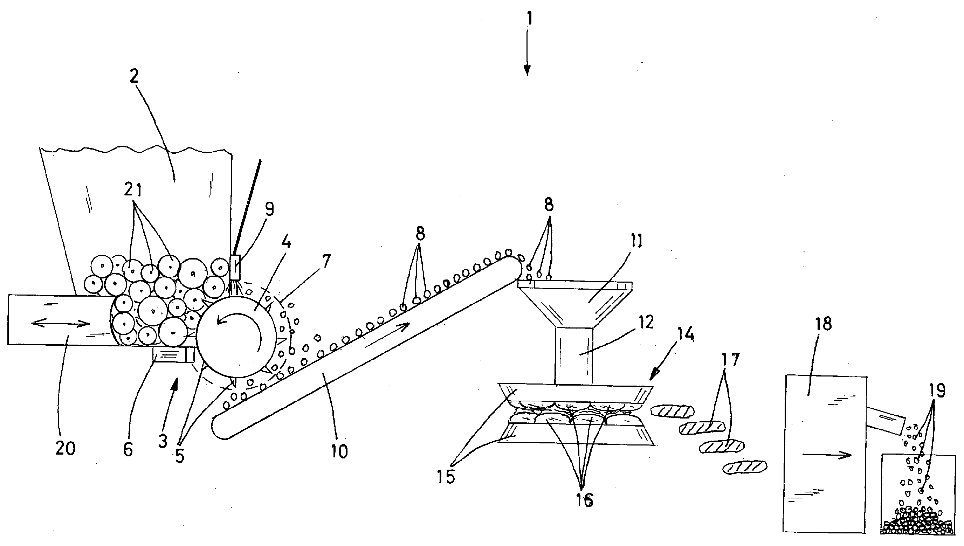

## Patentansprüche

1. Verfahren zum Recyclen von klebstoffbehaftetem Material in Form von Folienresten,
wobei die Folienreste zerkleinert werden,
und wobei den Folienresten ein nicht klebender Stoff zugemischt wird,
wobei die Folienreste (21) in einer Zerkleinerungsvorrichtung zu Materialklumpen (8) grob zerkleinert werden, und dem Material ein die Klebkraft des Klebstoffanteils verringernder Stoff zugesetzt wird,
und die verringert klebrigen Materialklumpen (8) in einen Agglomerator eingebracht werden,
**dadurch gekennzeichnet,**
▪ dass die Folienreste (21) in der Zerkleinerungsvorrichtung zu Materialklumpen (8) mit einem jeweiligen Durchmesser von 50 mm bis 150 mm grob zerkleinert werden,
▪ der die Klebkraft des Klebstoffanteils verringernde Stoff den Materialklumpen (8) flüssig oder pulverförmig zugesetzt wird,
▪ im Agglomerator die Materialklumpen (8) auf eine Temperatur von 100°C bis 200°C gebracht werden, die unterhalb des Schmelzpunktes des jeweils verarbeiteten Folienwerkstoffs liegt,
▪ und die Materialklumpen (8) zu als Agglomerat bezeichneten Granuli zerkleinert werden.

2. Verfahren nach Anspruch 1,
**dadurch gekennzeichnet,**
**dass** der die Klebkraft des Klebstoffanteils verringernde Stoff auf die Materialklumpen (8) aufgedüst wird.

3. Verfahren nach Anspruch 1 oder 2,
**dadurch gekennzeichnet,**
**dass** als Stoff ein die Klebkraft auflösendes Tensid verwendet wird.

4. Verfahren nach Anspruch 1 oder 2,
**dadurch gekennzeichnet,**
**dass** als Stoff ein die Klebkraft bindendes Pulver verwendet wird.

5. Verfahren nach Anspruch 1 oder 2,
**dadurch gekennzeichnet,**
**dass** als Stoff ein öliges Gleitmittel verwendet wird.

6. Verfahren nach einem der vorhergehenden Ansprüche,
**dadurch gekennzeichnet,**
**dass** als Agglomerator ein Scheibenverdichter (14) verwendet wird, in welchen die Materialklumpen eingebracht werden,
und **dass** das in den Scheibenverdichter (14) eingebrachte Material zu Materialsträngen kompaktiert wird,
und **dass** diese Materialstränge anschließend zu den als Agglomerat bezeichneten Granuli zerkleinert werden.

7. Anordnung zur Durchführung des in einem der vorhergehenden Ansprüche beschriebenen Verfahrens,
mit einer eine Sieblochung aufweisenden Zerkleinerungsvorrichtung (3) zum groben Zerkleinern der Folienreste (21) zu Materialklumpen (8),
und einer von der Zerkleinerungsvorrichtung zu einem Agglomerator führenden Fördereinrichtung
**dadurch gekennzeichnet,**
**dass** die Zerkleinerungsvorrichtung (3) eine Sieblochung von 50 bis 150 mm aufweist,
hinter der Zerkleinerungsvorrichtung (3) eine Bedüsungs- oder Benetzungsstation zum Aufbringen des die Klebkraft des Klebstoffanteils verringernden Stoffs auf die Materialklumpen (8) vorgesehen ist,
und **dass** eine dem Agglomerator nachgeschaltete Granuliervorrichtung vorgesehen ist.

8. Anordnung nach Anspruch 7,
**dadurch gekennzeichnet,**
**dass** die Zerkleinerungsvorrichtung (3) eine Sieblochung von 80 bis 120 mm aufweist.

9. Anordnung nach Anspruch 7 oder 8,
**dadurch gekennzeichnet,**
**dass** die Zerkleinerungsvorrichtung (3) als Einwellenzerkleinerer ausgestaltet ist,
der auf einer drehbaren Welle (4) angeordnete erste Messer (5) und feststehend angeordnete zweite Messer (6) aufweist,
wobei in Drehrichtung der Welle (4) hinter den zweiten Messern (6) eine mit Durchtrittsöffnungen versehene Abschirmung (7) vorgesehen ist.

10. Anordnung nach Anspruch 9,
**dadurch gekennzeichnet,**
**dass** die Abschirmung (7) als Lochblech ausgestaltet ist.

11. Anordnung nach einem der Ansprüche 7 bis 10,
**dadurch gekennzeichnet,**
**dass** zwischen der Zerkleinerungsvorrichtung (3) und dem Agglomerator ein die Materialklumpen (8) transportierendes Förderband (10) angeordnet ist.

12. Anordnung nach einem der Ansprüche 7 bis 11,
**dadurch gekennzeichnet,**
**dass** vor dem Agglomerator ein die Materialklumpen (8) in den Agglomerator fördernder Schneckenförderer (12) angeordnet ist.

13. Anordnung nach Anspruch 12,
**dadurch gekennzeichnet,**
**dass** der Schneckenförderer (12) die Materialklumpen (8) abwärts fördernd ausgerichtet ist.

14. Anordnung nach den Ansprüchen 12 und 13,
**dadurch gekennzeichnet,**
**dass** über dem Schneckenförderer (12) ein Trichter (11) angeordnet ist,
und **dass** das Förderband (10) die Materialklumpen (8) in den Trichter (11) fördernd ausgerichtet ist.

15. Anordnung nach einem der Ansprüche 7 bis 14,
**dadurch gekennzeichnet,**
**dass** der Agglomerator als Scheibenverdichter (14) ausgestaltet ist.

## Claims

1. Method of recycling adhesive-coated material in the form of foil remnants by breaking down the foil remnants and adding a non-adhesive material to the foil remnants by which method the foil remnants (21) are coarsely broken down into lumps of material (8) in a breaking-down device and a substance for reducing the adhesive strength of the adhesive content is added to the material and the reducedly adhesive lumps of material (8) are conveyed into an agglomerator, **characterised in that**
the foil remnants (21) are coarsely broken down in the breaking-down device into lumps of material (8) of between 50 mm and 150 mm in diameter, and
the substance for reducing the adhesive strength of the adhesive content is added to the lumps of material (8) in a liquid or powder form and
the lumps of material (8) are heated in the agglomerator to a temperature of 100 °C to 200 °C that is below the melting point of the foil material being processed
and the lumps of material (8) are broken down into granuli described as "agglomerate".

2. Method in accordance with claim 1, **characterised in that** the substance for reducing the adhesive strength of the adhesive content is sprayed onto the lumps of material (8).

3. Method in accordance with claim 1 or 2, **characterised in that** the substance used is an adhesive-strength-lowering tenside.

4. Method in accordance with claim 1 or 2, **characterised in that** the substance used is an adhesive-strength-binding powder.

5. Method in accordance with claim 1 or 2, **characterised in that** the substance used is an oily lubricant.

6. Method in accordance with any one of the foregoing claims, **characterised in that** the agglomerator used is in the form of a disk compactor (14) into which the lumps of material are conveyed
and **in that** the material conveyed into the disk compactor (14) is compacted to form strands of material
and **in that** these strands of material are then broken down into granuli described as "agglomerate".

7. Arrangement for implementing the method described in any one of the foregoing claims having a breaking-down device (3) incorporating screen perforations for coarsely breaking down foil remnants (21) into lumps of material (8)
and having a conveyor system leading from the breaking-down device to an agglomerator **characterised in that** the breaking-down device (3) incorporates screen perforations of between 50 mm and 150 mm
and behind the breaking-down device (3) a spraying or wetting station for applying to the lumps of material (8) the substance for reducing the adhesive strength of the adhesive content and **in that** a granulating device is located downstream of the agglomerator.

8. Arrangement in accordance with claim 7, **characterised in that** the breaking-down device (3) incorporates screen perforations of between 80 mm and 120 mm.

9. Arrangement in accordance with claim 7 or 8, **characterised in that** the breaking-down device (3) is formed as a single-shaft shredder that incorporates a first set of cutters (5) disposed on a rotatable shaft (4) and a second, fixed set of cutters (6), where a shield (7) provided with openings is provided for behind the second set of cutters (6) in the direction of rotation of the shaft (4).

10. Arrangement in accordance with claim 9, **characterised in that** the shield (7) is formed as a perforated plate.

11. Arrangement in accordance with any one of claims 7 to 10, **characterised in that** a conveyor belt (10) for transporting the lumps of material (8) is disposed between the breaking-down device (3) and the agglomerator.

12. Arrangement in accordance with any one of claims 7 to 11, **characterised in that** a worm conveyor (12) for conveying the lumps of material (8) into the agglomerator is disposed upstream of the agglomerator.

13. Arrangement in accordance with claim 12, **characterised in that** the worm conveyor (12) is arranged so as to convey the lumps of material (8) downwards.

14. Arrangement in accordance with claims 12 and 13, **characterised in that** a hopper (11) is disposed above the worm conveyor (12) and **in that** the conveyor belt (10) is arranged so as to convey the lumps of material (8) into the hopper (11).

15. Arrangement in accordance with any one of claims 7 to 14, **characterised in that** the agglomerator is formed as a disk compactor (14).

## Revendications

1. Procédé pour recycler des matériaux en forme de restes de feuilles, comportant de la colle, sachant que les restes de feuilles sont broyés et sachant qu'aux restes de feuilles est ajoutée une substance non collante, sachant que les restes (21) de feuilles sont broyés grossièrement en mottes (8) de matériau dans un dispositif de broyage, et qu'au matériau est ajouté une substance réduisant l'adhérence de la part de colle, et que les mottes (8) de matériau moins collantes sont introduites dans un agglomérateur, **caractérisé en ce**
**que** les restes (21) de feuilles sont broyés grossièrement, dans le dispositif de broyage, en mottes (8) de matériau d'un diamètre respectif compris entre 50 et 150 mm,
**que** la substance réduisant l'adhérence de la part de colle est ajoutée aux mottes (8) de matériau sous forme liquide ou pulvérulente,
**que** dans l'agglomérateur les mottes (8) de matériau sont portées à une température comprise entre 100 et 200 °C, qui est inférieure au point de fusion du matériau de feuille respectivement transformé, et
**que** les mottes (8) de matériau sont broyées en granulés appelés « agglomérat ».

2. Procédé selon la revendication 1, **caractérisé en ce que** la substance réduisant l'adhérence de la part de colle est pulvérisée par buse sur les mottes (8) de matériau.

3. Procédé selon la revendication 1 ou 2, **caractérisé en ce que** la substance utilisée est un tensioactif supprimant l'adhérence.

4. Procédé selon la revendication 1 ou 2, **caractérisé en ce que** la substance utilisée est une poudre liant l'adhérence.

5. Procédé selon la revendication 1 ou 2, **caractérisé en ce que** la substance utilisée est un agent de glissement huileux.

6. Procédé selon l'une des revendications précédentes, **caractérisé en ce qu'**est utilisé, comme agglomérateur, un compacteur à disques (14) dans lequel les mottes de matériau sont introduites, et que le matériau introduit dans le compacteur à disques (14) est compacté en boudins de matériau, et que ces boudins de matériau sont ensuite broyés en granulés appelés « agglomérat ».

7. Agencement permettant de réaliser le procédé décrit dans l'une des revendications précédentes, comprenant un dispositif de broyage (3) avec tamis pour broyer grossièrement les restes (21) de feuille en mottes (8) de matériau, et
un équipement de convoyage conduisant du dispositif de broyage vers un agglomérateur,
**caractérisé en ce**
**que** le dispositif de broyage (3) présente un tamis aux perforations comprises entre 50 et 150 mm,
**qu'**en aval du dispositif de broyage (3) est prévue une station de pulvérisation ou de mouillage pour appliquer la substance réduisant l'adhérence de la part de colle sur les mottes (8) de matériau, et
**qu'**un dispositif de granulation est prévu en aval de l'agglomérateur.

8. Agencement selon la revendication 7, **caractérisé en ce que** le dispositif de broyage (3) présente un tamis aux perforations comprises entre 80 et 120 mm.

9. Agencement selon la revendication 7 ou 8, **caractérisé en ce**
**que** le dispositif de broyage (3) est configuré en broyeur mono-arbre qui présente des premiers couteaux (5) agencés sur un arbre (4) rotatif, et
**que** des seconds couteaux (6) agencés immobiles,
sachant que dans le sens de rotation de l'arbre (4), derrière les seconds couteaux (6), est prévu un blindage (7) doté d'orifice de passage.

10. Agencement selon la revendication 9, **caractérisé en ce que** le blindage (7) est configuré en tôle ajourée.

11. Agencement selon l'une des revendications 7 à 10, **caractérisé en ce qu'**entre le dispositif (3) de broyage et l'agglomérateur est agencé un tapis convoyeur (10) transportant les mottes (8) de matériau.

12. Agencement selon l'une des revendications 7 à 11, **caractérisé en ce qu'**en amont de l'agglomérateur est agencé un convoyeur à vis sans fin (12) convoyant les mottes (8) de matériau jusque dans l'agglomérateur.

13. Agencement selon la revendication 12, **caractérisé en ce que** le convoyeur à vis sans fin (12) est orienté de sorte à convoyer les mottes (8) de matériau dans le sens descendant.

14. Agencement selon les revendications 12 et 13, **caractérisé en ce**
**qu'**un entonnoir (11) est agencé au-dessus du convoyeur à vis sans fin (12), et
en ce que le tapis convoyeur (10) est orienté de sorte à convoyer les mottes (8) de matériau vers l'intérieur de l'entonnoir (11).

15. Agencement selon l'une des revendications 7 à 14, **caractérisé en ce que** l'agglomérateur est configuré comme un compacteur à disques (14).
